# EUROPÄISCHE PATENTSCHRIFT

(11) **EP 2 302 563 B1**
(45) Veröffentlichungstag und Bekanntmachung des Hinweises auf die Patenterteilung: **01.07.2015**
(21) Anmeldenummer: 10401105.1
(22) Anmeldetag: 16.07.2010
(51) Int. Cl.: G06K 7/10, G06K 7/14

(54) **Verfahren zur Erfassung von Barcodes**
Method for recording barcodes
Procédé destiné à la saisie de codes barres

(30) Priorität: 25.09.2009 DE 102009044106
(43) Veröffentlichungstag der Anmeldung: 30.03.2011
(73) Patentinhaber: Wincor Nixdorf International GmbH, 33106 Paderborn (DE)
(72) Erfinder: Jokhovets, Lioubov, 98693 Ilmenau (DE); Schäfer, Oliver, 10369 Berlin (DE); Schiller, Gerhard, 13467 Berlin (DE); Seitz, Reiner, 10115 Berlin (DE); Widmaier, Dominik, 10715 Berlin (DE); Zolfl, Florian, 13357 Berlin (DE)

(56) Entgegenhaltungen:
- US-A1- 2003 121 980
- US-A1- 2004 004 124
- US-B1- 7 185 816

## Beschreibung

Die Erfindung geht aus von einem Verfahren zur Erfassung von an Gegenständen angeordneten Barcodes.

Barcodes werden auch als Strichcodes oder Balkencodes bezeichnet. Es handelt sich um Markierungen aus mehreren unterschiedlich breiten, parallelen Strichen mit unterschiedlichen Abständen zwischen den Strichen. Breite und Abstände der Striche codieren eine Information, die mit optischen Abtast- oder Leseeinrichtungen erfasst werden kann. Neben den Strichen können außerdem eine oder mehrere Prüfziffern als Bestandteile in dem Barcode enthalten sein. Es sind eindimensionale Barcodes bekannt, die zwar zweidimensional ausgebildet sind, aber nur eindimensional variierende Strich- oder Balkenfolgen enthalten. Darüber hinaus sind zweidimensionale Barcodes bekannt, zum Beispiel gestapelte Codes, bei denen eindimensionale Strichcodes auf mehrere Zeilen verteilt sind, oder Matrixcodes, bei denen die Daten innerhalb einer Matrix aus Blöcken codiert sind. Ferner sind Barcodes bekannt, bei denen die Länge der Striche zusätzliche Informationen enthält.

Barcodes werden auf Gegenständen angebracht, die automatisch erfasst und identifiziert werden sollen. Hierzu zählen zum Beispiel Konsumgüter im Einzel- oder Großhandel, Pakete in Logistikunternehmen, Gepäckstücke in Flughäfen und Leergut in Leergutrücknahmeautomaten. Die Barcodes enthalten Informationen betreffend den Gegenstand, auf dem sie angebracht sind, zum Beispiel eine Artikelnummer, eine Herkunftsangabe, einen Hersteller, einen Zielort oder einen Preis. Das Lesen der Barcodes erfolgt mittels eines optischen Sensors oder Detektors, beispielsweise mittels einer Kamera oder eines Scanners. Diese Sensoren liefern ein Grauwertbild oder ein Farbbild, beispielsweise ein RGB-Bild mit drei Farbkanälen Rot-Grün-Blau. Während bei einem Grauwertbild die Informationen in den Helligkeitsunterschieden enthalten sind, liefert ein Farbbild die Informationen als Farbanteile zu den jeweiligen Farbkanälen.

US 7185816 offenbart ein Verfahren zur Erfassung von Barcodes, wobei als weitere Merkmale die Farbe des Hintergrunds des Barcodes sowei ein weiterer Barcode in der Umgebung des Basiscodes bestimmt werden kann.

Beim Abtasten von Barcodes können eine ungünstige Ausrichtung des Gegenstands relativ zum optischen Sensor, eine Licht reflektierende Oberfläche des Gegenstands, an dem der Barcode angebracht ist, eine flexible oder unebene Oberfläche des mit dem Barcode ausgestatteten Gegenstands, ein beschädigter Barcode oder ein durch einen anderen Gegenstand teilweise verdeckter Barcode dazu führen, dass der Barcode nicht vollständig erfasst und erkannt wird. Dies führt dazu, dass die betreffenden Gegenstände entweder maschinell relativ zum Sensor zusätzlich bewegt werden müssen oder ausgesondert und von Hand erfasst werden müssen. Beides ist mit einem hohen Aufwand verbunden und reduziert den Durchsatz bei der Barcode-Erfassung. Ferner ist eine hohe Auflösung des optischen Sensors notwendig.

Der Erfindung liegt die Aufgabe zugrunde, ein Verfahren zur Erfassung von Barcodes an Gegenständen zur Verfügung zu stellen, das eine eindeutige und zuverlässige Identifizierung von Gegenständen auch dann ermöglicht, wenn ein Barcode beschädigt oder an einem Gegenstand schlecht auflösbar oder erkennbar ist.

Diese Aufgabe wird durch ein Verfahren mit den Merkmalen des Anspruchs 1 gelöst.

Wird ein Barcode aufgrund einer Beschädigung oder aufgrund ungünstiger Bedingungen beim Abtasten nur unvollständig erfasst, so kann durch das mindestens eine weitere aus den Farb- und/ oder Grauwertbilddaten bestimmte Merkmal die Anzahl der Möglichkeiten bei der eindeutige Zuordnung des Barcodes und der Identifizierung des Barcodes eingeschränkt werden. In manchen Fällen genügt bereits ein weiteres Merkmal, um eine Identifizierung eines Gegenstandes trotz unvollständig erfasstem Barcode zu erreichen. In anderen Fällen müssen mehrere Merkmale erfasst werden. Dies hängt zum einen davon ab, wie groß der Anteil des Barcodes ist, der nicht erfasst werden kann, und zum anderen davon, wie viele unterschiedliche Gegenstände das weitere Merkmal aufweist.

Das eine zusätzliche Merkmal oder die mehreren zusätzlichen Merkmale sind zusammen mit den Barcodes der zugehörigen Gegenstände vorteilhafterweise in einer Datenbank hinterlegt. Wird der Barcode eines Gegenstands nur teilweise erkannt, so werden das aus den Farb- und/ oder Grauwertbilddaten zusätzlich bestimmte Merkmal und die ermittelten Bestandteile des Barcodes mit den in der Datenbank abgelegten Daten verglichen. Durch den Vergleich kann der vollständige Barcode bestimmt und der zugehörige Gegenstand eindeutig identifiziert werden.

Wird der Barcode bereits aus den Farb- und/ oder Grauwertbilddaten vollständig bestimmt, so ist eine Bestimmung und Auswertung eines zusätzlichen Merkmals zur Identifizierung des zugehörigen Gegenstands nicht notwendig. In diesem Fall kann die Bestimmung und/ oder Auswertung eines zusätzlichen Merkmals aus den Farb- und/ oder Grauwertbilddaten unterbleiben. Es besteht jedoch die Möglichkeit, zu Kontroll- und Prüfzwecken das mindestens eine zusätzliche Merkmal auch dann zu bestimmen und auszuwerten, wenn der Barcode eines Gegenstands vollständig erkannt wird. Darüber hinaus kann das zusätzliche Merkmal auch bei vollständig ermitteltem Barcode bestimmt werden, um eine Datenbank mit den Barcodes und den zusätzlichen Merkmalen der zu identifizierenden Gegenständen anzulegen.

Das erfindungsgemäße Verfahren ermöglicht damit eine Identifizierung von Gegenständen auch dann, wenn der Barcode nur teilweise und unvollständig lesbar ist. Hierzu sind keine weiteren Sensoren notwendig. Es genügt, die zur Erfassung des Barcodes aufgenommenen Bilddaten auszuwerten und dabei weitere Merkmale aus den Bilddaten zu bestimmen, die entweder den Barcode selbst betreffen oder seine Umgebung. Da die Gegenstände mit den nur unvollständig lesbaren Barcodes nicht zusätzlich relativ zu dem optischen Sensor bewegt werden müssen, und eine Aussonderung der Gegenstände in den meisten Fällen umgangen werden kann, ist der Durchsatz bei der Barcode-Erfassung höher als bei bekannten Verfahren. Darüber hinaus können die mit der Durchführung des Verfahrens verbundenen Kosten reduziert werden, da die optische Auflösung nicht so hoch sein muss wie bei bekannten Verfahren. Es genügt eine kleine Anzahl an Bildpunkten pro optisch abgetastetem oder gescanntem Volumen.

Nach einer vorteilhaften Ausgestaltung der Erfindung wird als weiteres Merkmal die Farbe des Hintergrundes des Barcodes und/ oder der Umgebung des Barcodes bestimmt.

Nach einer weiteren vorteilhaften Ausgestaltung der Erfindung werden die Anteile an Rot und/ oder Grün und/ oder Blau in den Farbbilddaten bestimmt. Die Anteile können in Prozent mit einer Toleranz angegeben werden.

Nach einer weiteren vorteilhaften Ausgestaltung der Erfindung wird als weiteres Merkmal der Kontrast zwischen den Bestandteilen des Barcodes und dem Hintergrund des Barcodes bestimmt. Er gibt Aufschluss über die hellen und dunklen Bereiche in den aufgenommenen Bilddaten.

Nach einer weiteren vorteilhaften Ausgestaltung der Erfindung wird zu mehreren Bestandteilen des Barcodes die Anzahl der Bildpunkte bestimmt. Dies gibt Aufschluss über die Form des Gegenstands. Ist die Oberfläche, auf der der Barcode angebracht ist, zum Beispiel nach außen oder innen gewölbt, so verändert sich die Anzahl der Bildpunkte der Bestandteile des Barcodes. Anstatt der Bestandteile des Barcodes kann die Anzahl der Bildpunkte auch zu Teilen in der Umgebung des Barcodes bestimmt werden. In der Umgebung des Barcodes sind häufig weitere Informationen wie zum Beispiel das Gewicht oder der Hersteller angegeben.

Nach einer weiteren vorteilhaften Ausgestaltung der Erfindung wird als zusätzliches Merkmal die Größe des Barcodes bestimmt. Die Größe des Barcodes kann von der Größe des Gegenstands abhängen, auf dem der Barcode angebracht ist.

Nach einer weiteren vorteilhaften Ausgestaltung der Erfindung wird als zusätzliches Merkmal die äußere Form des Barcodes bestimmt. Auf Gegenständen mit einer formstabilen und ebenen Oberfläche weisen Barcodes meist eine rechteckige Form auf. Befindet sich der Barcode dagegen auf einer Verpackung aus einem flexiblen Beutel, in welchem mehrere lose Gegenstände, wie zum Beispiel Bonbons oder Nudeln enthalten sind, so kann die äußere Kontur des Barcodes eine unregelmäßige Form aufweisen. Aus der äußeren Form oder der Kontur des Barcodes kann damit auf die Festigkeit oder Flexibilität des Gegenstands geschlossen werden.

Nach einer weiteren vorteilhaften Ausgestaltung der Erfindung werden als Merkmale Informationen erfasst, die in der Umgebung des Barcodes an dem Gegenstand angeordnet sind. Hierbei kann es sich zum Beispiel um das Gewicht des Gegenstands, den Hersteller des zugehörigen Produkts oder eine Eigenschaft wie Pfandflasche handeln.

Nach einer weiteren vorteilhaften Ausgestaltung der Erfindung wird die Umgebung des Barcodes in mehrere Bereiche unterteilt. Dies kann auch als blockbasierte Segmentierung bezeichnet werden. Zu jedem Bereich wird mindestens ein Merkmal bestimmt. Vorteilhafterweise werden mehrere Merkmale je Bereich bestimmt. Die Zusammenstellung der Merkmale je Bereich wird als Merkmals-Satz bezeichnet. So kann zum Beispiel um den Barcode ein rechteckiger Rahmen gelegt werden, der die Umgebung definiert. Die Ausrichtung des Rahmens, sowie die richtungsabhängige Informationen, wie beispielsweise die Anzahl der Konturpunkte in X- und Y-Richtung, kann anhand der Kontur oder anhand der Ausrichtung des Barcodes korrigiert werden. Dabei wird ausgenutzt, dass der Barcode auf einem Gegenstand sehr gut selektiert werden kann, zum Beispiel durch sich wiederholende, mit bestimmter Regelmäßigkeit in einer Zeile oder Spalte auftretende Konturpunkte. Darüber hinaus kann mit Hilfe der Aufnahme des Barcodes die Ausrichtung des Gegenstands relativ zur Kamera festgestellt werden. Der Rahmen wird beispielsweise in vier Teile zerlegt. Jedes Teil entspricht einem Bereich. Zu jedem Bereich können nun beispielsweise der Rotanteil, der Grünanteil, die Anzahl der Konturpunkte in einer ersten Richtung und die Anzahl der Konturpunkte in einer zweiten Richtung, welche senkrecht zu dieser ersten Richtung ist, bestimmt werden. Je größer die Anzahl der Bereiche oder Segmente ist, umso effektiver ist die Identifizierung der Gegenstände und umso größer ist der mit der Identifizierung verbundene Rechenaufwand. Um den Rechenaufwand nicht zu sehr zu steigern, ist daher eine Aufteilung in vier Bereiche von Vorteil.

Nach einer weiteren vorteilhaften Ausgestaltung der Erfindung werden zu jedem Bereich das gleiche Merkmal oder die gleichen Merkmale bestimmt. Der Merkmals-Satz ist damit zu jedem Bereich der Umgebung gleich. Die Werte der Merkmale können jedoch unterschiedlich sein.

Nach einer weiteren vorteilhaften Ausgestaltung der Erfindung werden vor der Erfassung die Barcodes aller zu erfassenden Gegenstände und mindestens ein weiteres Merkmal zu jedem Gegenstand in einer Datenbank gespeichert. Nach dem Auswerten der durch den Sensor ermittelten Farb- und/ oder Grauwertbilddaten und dem Bestimmen der einzelnen Bestandteile eines unvollständig erfassten Barcodes aus den ausgewerteten Farb- und/ oder Grauwertbilddaten werden die ermittelten Bestandteile des Barcodes mit den in der Datenbank gespeicherten Barcodes verglichen. Ferner wird das aus den Farb- und/ oder Grauwertbilddaten bestimmte zusätzliche Merkmal mit den gespeicherten Merkmalen verglichen. Dadurch kann die Anzahl der möglichen Barcodes in der Regel bereits eingeschränkt werden. Der Vergleich mit den in der Datenbank enthaltenen Daten kann ferner zu Kontroll- und Prüfzwecken durchgeführt werden, selbst wenn ein Barcode aus den Farb- und Grauwertbilddaten vollständig ermittelt wird.

Weitere Vorteile und vorteilhafte Ausgestaltungen der Erfindung sind den Ansprüchen zu entnehmen.

Sämtliche Merkmale der Erfindung können in beliebiger Kombination miteinander erfindungswesentlich sein.

## Patentansprüche

1. Verfahren zur Erfassung von an Gegenständen angeordneten Barcodes mit folgenden Verfahrensschritten:
Abtasten des Barcodes und der Umgebung des Barcodes mittels eines optischen Sensors und Aufnehmen von Farb- und/ oder Grauwertbilddaten des Barcodes und der Umgebung des Barcodes,
Auswerten der durch den Sensor ermittelten Farb- und/ oder Grauwertbilddaten und Bestimmen der einzelnen Bestandteile des Barcodes aus den ausgewerteten Farb- und Grauwertbilddaten,
Bestimmen mindestens eines weiteren Merkmals des Barcodes oder der Umgebung des Barcodes aus den ausgewerteten Farb- und Grauwertbilddaten,
dass als weiteres Merkmal die Farbe des Hintergrundes des Barcodes und/ oder der Umgebung des Barcodes bestimmt wird,
**dadurch gekennzeichnet,**
**dass** als Merkmale Informationen wie Gewicht und/oder Hersteller erfasst werden, die in der Umgebung des Barcodes an dem Gegenstand angeordnet sind und diese nicht Bestandteil eines Barcodes sind.

2. Verfahren nach Anspruch 1, **dadurch gekennzeichnet, dass** die Anteile an Rot und/ oder Grün und/ oder Blau in den Farbbilddaten bestimmt werden.

3. Verfahren nach einem der vorhergehenden Ansprüche, **dadurch gekennzeichnet, dass** als weiteres Merkmal der Kontrast zwischen den Bestandteilen des Barcodes und dem Hintergrund des Barcodes bestimmt wird.

4. Verfahren nach einem der vorhergehenden Ansprüche, **dadurch gekennzeichnet, dass** zu mehreren Bestandteilen des Barcodes die Anzahl der Bildpunkte des Barcodes bestimmt werden.

5. Verfahren nach einem der vorhergehenden Ansprüche, **dadurch gekennzeichnet, dass** die Anzahl der Bildpunkte für mindestens ein Bestandteil des weiteren Merkmals bestimmt wird.

6. Verfahren nach einem der vorhergehenden Ansprüche, **dadurch gekennzeichnet, dass** die Umgebung des Barcodes in mehrere Bereiche unterteilt wird, und dass zu jedem Bereich mindestens ein Merkmal bestimmt wird.

7. Verfahren nach Anspruch 6, **dadurch gekennzeichnet, dass** zu jedem Bereich das gleiche Merkmal oder die gleichen Merkmale bestimmt werden.

8. Verfahren nach Anspruch 6 oder 7, **dadurch gekennzeichnet, dass** ein Rahmen um den Barcode gelegt wird, welcher die Umgebung definiert und dass der Rahmen in mindestens vier Teile unterteilt wird.

9. Verfahren nach einem der vorhergehenden Ansprüche, **dadurch gekennzeichnet, dass** vor der Erfassung die Barcodes aller zu erfassenden Gegenstände und mindestens ein weiteres Merkmal der Barcodes oder der Umgebung der Barcodes in einer Datenbank gespeichert werden, und dass nach dem Auswerten der durch den Sensor ermittelten Farb- und/ oder Grauwertbilddaten und dem Bestimmen der einzelnen Bestandteile des Barcodes aus den ausgewerteten Farb- und/ oder Grauwertbilddaten und dem Bestimmen des zusätzlichen Merkmals die ermittelten Bestandteile des Barcodes und das zusätzliche Merkmal mit den in der Datenbank gespeicherten Barcodes und den gespeicherten Merkmalen verglichen werden.

## Claims

1. Method for detecting barcodes arranged on objects, having the following method steps:
scanning the barcode and the environment of the barcode by means of an optical sensor, and recording colour and/or greyscale image data of the barcode and of the environment of the barcode,
evaluating the colour and/or greyscale image data determined by the sensor, and determining the individual components of the barcode from the evaluated colour and greyscale image data,
determining at least one further feature of the barcode or of the environment of the barcode from the evaluated colour and greyscale image data,
that the colour of the background of the barcode and/or of the environment of the barcode are/is determined as the further feature,
**characterized in that**
information items such as weight and/or manufacturer which are arranged on the object in the environment of the barcode and are not a constituent of a barcode are detected as features.

2. Method according to Claim 1, **characterized in that** the proportions of red and/or green and/or blue in the colour image data are determined.

3. Method according to one of the preceding claims, **characterized in that** the contrast between the components of the barcode and the background of the barcode are determined as a further feature.

4. Method according to one of the preceding claims, **characterized in that** the number of the pixels of the barcode is determined in relation to a plurality of components of the barcode.

5. Method according to one of the preceding claims, **characterized in that** the number of the pixels is determined for at least one component of the further feature.

6. Method according to one of the preceding claims, **characterized in that** the environment of the barcode is subdivided into a plurality of areas, and **in that** at least one feature is determined in relation to each area.

7. Method according to Claim 6, **characterized in that** the same feature or the same features is/are determined in relation to each area.

8. Method according to Claim 6 or 7, **characterized in that** a frame which defines the environment is placed around the barcode, and **in that** the frame is subdivided into at least four parts.

9. Method according to one of the preceding claims, **characterized in that** before the detection the barcodes of all the objects to be detected, and at least one further feature of the barcodes or of the environment of the barcodes are stored in a database, and **in that**, after the evaluation of the colour and/or greyscale image data determined by the sensor and the determination of the individual components of the barcode from the evaluated colour and/or greyscale image data and the determination of the additional feature, the determined components of the barcode and the additional feature are compared with the barcodes stored in the database and the stored features.

## Revendications

1. Procédé de détection d'un code à barres disposé sur des articles, comportant les étapes de procédé suivantes :
balayer le code à barres et l'environnement du code à barres au moyen d'un capteur optique et acquérir des données d'images colorées et/ou de niveaux de gris du code à barres et de l'environnement du code à barres,
évaluer les données d'images colorées et/ou de niveaux de bris obtenues au moyen du capteur et déterminer les parties constitutives individuelles du code à barres à partir des données d'images colorées et de niveaux de gris évaluées,
déterminer au moins une caractéristique supplémentaire du code à barres ou de l'environnement du code à barres à partir des données d'images colorées et de niveaux de gris évaluées,
la caractéristique supplémentaire déterminée étant la couleur de l'arrière-plan du code à barres et/ou de l'environnement du code à barres,
**caractérisé**
**en ce qu'**on détecte en tant que caractéristiques, des informations telles que le poids et/ou le fabricant, qui sont disposées dans l'environnement du code à barres sur l'article et en ce que celles-ci ne font pas partie d'un code à barres.

2. Procédé selon la revendication 1, **caractérisé en ce que** les proportions de rouge et/ou de vert et/ou de bleu sont déterminées dans les données d'images colorées.

3. Procédé selon l'une quelconque des revendications précédentes, **caractérisé en ce qu'**on détermine, en tant que caractéristiques supplémentaire, le contraste entre les parties constitutives du code à barres et l'arrière-plan du code à barres.

4. Procédé selon l'une quelconque des revendications précédentes, **caractérisé en ce qu'**on détermine en une pluralité de parties constitutives du code à barres le nombre de points d'image du code à barres.

5. Procédé selon l'une quelconque des revendications précédentes, **caractérisé en ce que** le nombre des points d'image est déterminé pour au moins une partie constitutive de la caractéristique supplémentaire.

6. Procédé selon l'une quelconque des revendications précédentes, **caractérisé en ce que** l'environnement du code à barres est divisé en une pluralité de zones et **en ce qu'**on détermine dans chaque zone au moins une caractéristique.

7. Procédé selon la revendication 6, **caractérisé en ce qu'**on détermine dans chaque zone la même caractéristique ou des caractéristiques identiques.

8. Procédé selon la revendication 6 ou 7, **caractérisé en ce qu'**un cadre est placé autour du code à barres, celui-ci définissant l'environnement et **en ce que** le cadre est divisé en au moins quatre parties.

9. Procédé selon l'une quelconque des revendications précédentes, **caractérisé en ce que**, avant de détecter le code à barres, tous les articles à détecter et au moins une caractéristique supplémentaire du code à barres ou de l'environnement du code à barres sont stockées dans une banque de données et **en ce que**, après l'évaluation des données d'images colorées et/ou de niveaux de gris obtenues au moyen du capteur et la détermination des parties constitutives individuelles du code à barres à partir des données d'images colorées et/ou de niveaux de gris évaluées et la détermination de la caractéristique supplémentaire, les parties constitutives obtenues du code à barres et la caractéristique supplémentaire sont comparées au code à barres stocké et aux caractéristiques stockées dans la banque de données.
